# EUROPÄISCHE PATENTSCHRIFT

(11) **EP 3 832 122 B1**
(45) Veröffentlichungstag und Bekanntmachung des Hinweises auf die Patenterteilung: **28.05.2025**
(21) Anmeldenummer: 20205346.8
(22) Anmeldetag: 03.11.2020
(51) Int. Cl.: F02M 37/00, B60K 15/063, B60K 15/073, E01C 19/00, F02M 37/10, F02M 37/18, B60K 15/03, B60K 15/077, E01C 19/22, F02M 37/02

(54) **BAUMASCHINE MIT EINEM TANKSYSTEM**
CONSTRUCTION MACHINE WITH A TANK SYSTEM
MACHINE DE CHANTIER AVEC UN SYSTÈME DE RÉSERVOIR

(30) Priorität: 06.12.2019 DE 102019133272
(43) Veröffentlichungstag der Anmeldung: 09.06.2021
(73) Patentinhaber: Hamm AG, 95643 Tirschenreuth (DE)
(72) Erfinder: Köstler, Gerd, 95643 Tirschenreuth (DE); Reber, Stefan, 92715 Püchersreuth (DE); Landstorfer, Armin, 95666 Mitterteich (DE)
(74) Vertreter: Ruttensperger Lachnit Trossin Gomoll

(56) Entgegenhaltungen:
- EP-A1- 2 343 446
- WO-A1-2014/148986
- WO-A1-2018/210105
- DE-A1- 102009 049 799
- DE-U1- 202014 010 518

## Beschreibung

Die vorliegende Erfindung betrifft eine Baumaschine mit einem Tanksystem, das Tanksystem umfassend einen Kraftstofftank mit einer ein Tankvolumen nach außen abschließenden Tankaußenwand, ein durch eine Trennwand von einem Haupt-Tankvolumen des Tankvolumens getrenntes, mit dem Haupt-Tankvolumen in Kraftstoffaustauschverbindung stehendes Entnahme-Tankvolumen sowie eine Kraftstoff-Entnahmeanordnung mit einer Haupt-Kraftstoffpumpe und einer in das Entnahme-Tankvolumen einmündenden Entnahmeleitung zum Fördern von Kraftstoff vermittels der Haupt-Kraftstoffpumpe über die Entnahmeleitung aus dem Entnahme-Tankvolumen zu einem Kraftstoff verbrauchenden Systembereich.

Ein derartiges Tanksystem ist aus der DE 10 2013 011 665 A1 bekannt. Das Tankvolumen eines Kraftstofftanks dieses bekannten Tanksystems ist durch zwei Schottwände in ein durch diese beiden Schottwände eingegrenztes Entnahme-Tankvolumen und ein durch die beiden Schottwände vom Entnahme-Tankvolumen getrenntes Haupt-Tankvolumen unterteilt. Da die beiden Schottwände in einer Vertikalrichtung sich nur über einen Teilbereich des Tankvolumens ausgehend von einer Bodenwandung einer Tankaußenwand des Kraftstofftanks erstrecken, ist nach oben hin das Entnahme-Tankvolumen in Kraftstoffaustauschverbindung mit dem Haupt-Tankvolumen. Ferner sind in den Schottwänden Rücklaufventile vorgesehen, welche ein Nachströmen von Kraftstoff aus dem Haupt-Tankvolumen in das Entnahme-Tankvolumen zulassen, ein Ausströmen von Kraftstoff aus dem Entnahme-Tankvolumen in das Haupt-Tankvolumen jedoch unterbinden. Eine Entnahmeleitung einer Kraftstoff-Entnahmeanordnung mündet in das Entnahme-Tankvolumen ein, so dass eine Kraftstoffpumpe den im Tankvolumen enthaltenen Kraftstoff aus dem Entnahme-Tankvolumen in Richtung zu einem Kraftstoff verbrauchen den Systembereich, wie zum Beispiel einer als Antriebsaggregat eingesetzten Brennkraftmaschine, fördern kann.

Ein Tanksystem gemäß dem Oberbegriff des Anspruchs 1 ist aus der WO 2018/210105 A1 bekannt. Bei diesem bekannten Tanksystem ist ein Tank durch einen brückenartigen Trennbereich in zwei Tankbereiche unterteilt. Aus einem dieser Tankbereiche fördert eine Haupt-Kraftstoffpumpe Kraftstoff in Richtung zu einer Brennkraftmaschine. Aus dem anderen Tankbereich fördert eine als Saugstrahlpumpe ausgebildete Zusatz-Kraftstoffpumpe Kraftstoff in den Tankbereich, aus welchem die Haupt-Kraftstoffpumpe Kraftstoff zu der Brennkraftmaschine fördert. Die Böden der beiden Tankbereiche sind auf gleicher Höhe angeordnet, so dass auch die beiden Tankbereiche auf gleichem Niveau positioniert sind.

Die WO 2014/148986 A1 offenbart ein Tanksystem, bei welchem eine Haupt-Kraftstoffpumpe Kraftstoff aus einem ersten Tank zu einer Brennkraftmaschine fördert. Eine Zusatz-Kraftstoffpumpe fördert Brennstoff aus zwei miteinander in Verbindung stehenden weiteren Tanks in den ersten Tank.

Es ist die Aufgabe der vorliegenden Erfindung, eine Baumaschine mit einem Tanksystem vorzusehen, welches eine von einer Neigung des Tanksystems unbeeinträchtigte Entnahme von Kraftstoff aus einem Kraftstofftank des Tanksystems sicherstellt.

Erfindungsgemäß wird diese Aufgabe gelöst durch eine Baumaschine mit einem Tanksystem gemäß Anspruch 1. Das Tanksystem umfasst:
- einen Kraftstofftank mit einer ein Tankvolumen nach außen abschließenden Tankaußenwand,
- ein durch eine Trennwand von einem Haupt-Tankvolumen des Tankvolumens getrenntes, mit dem Haupt-Tankvolumen in Kraftstoffaustauschverbindung stehendes Entnahme-Tankvolumen,
- eine Kraftstoff-Entnahmeanordnung mit einer Haupt-Kraftstoffpumpe und einer in das Entnahme-Tankvolumen einmündenden Entnahmeleitung zum Fördern von Kraftstoff vermittels der Haupt-Kraftstoffpumpe über die Entnahmeleitung aus dem Entnahme-Tankvolumen zu einem Kraftstoff verbrauchenden Systembereich.

Das erfindungsgemäße Tanksystem zeichnet sich aus durch eine Kraftstoff-Speiseanordnung mit einer Zusatz-Kraftstoffpumpe zum Fördern von Kraftstoff aus dem Haupt-Tankvolumen in das Entnahme-Tankvolumen.

Anders als bei der aus dem Stand der Technik bekannten Anordnung, bei welcher das Entnahme-Tankvolumen passiv durch aus dem Haupt-Tankvolumen in dieses strömenden Kraftstoff befüllt wird, sorgt bei dem erfindungsgemäßen Aufbau die Kraftstoff aktiv aus dem Haupt-Tankvolumen in das Entnahme-Tankvolumen fördernde Zusatz-Kraftstoffpumpe dafür, dass unabhängig davon, mit welcher Neigung das Tanksystem beispielsweise im Arbeitsbetrieb einer Baumaschine positioniert ist, und somit auch unabhängig von einem die Schwerkrafteinwirkung erfordernden Speisen von Kraftstoff in das Entnahme-Tankvolumen Kraftstoff in das Entnahme-Tankvolumen gespeist wird, so dass eine geeignete Befüllung des Entnahme-Tankvolumens gewährleistet ist und somit keine Betriebsphasen entstehen können, in welchen aufgrund mangelnder Befüllung des Entnahme-Tankvolumens die Haupt-Kraftstoffpumpe zumindest vorübergehend keinen Kraftstoff in Richtung zu einem Kraftstoff verbrauchenden Systembereich, zum Beispiel Brennkraftmaschine, fördern kann.

Um zu gewährleisten, dass in dem Entnahme-Tankvolumen immer ein Bereich vorhanden ist, der unabhängig vom Füllstand des Tankvolumens Kraftstoff enthält, insbesondere Kraftstoff, der vermittels der Kraftstoff-Zusatzpumpe in das Entnahme-Tankvolumen gefördert wird, umfasst das Entnahme-Tankvolumen einen bezogen auf eine Vertikalrichtung unteren Entnahme-Tankvolumenbereich und einen an den unteren Entnahme-Tankvolumenbereich in Vertikalrichtung anschließenden oberen Entnahme-Tankvolumenbereich, wobei der untere Entnahme-Tankvolumenbereich derart vom Haupt-Tankvolumen getrennt ist, dass zwischen dem Haupt-Tankvolumen und dem unteren Entnahme-Tankvolumenbereich keine direkte Kraftstoffaustauschverbindung besteht.

Dabei kann ein zuverlässiges, unterbrechungsfreies Entnehmen von Kraftstoff aus dem Entnahme-Tankvolumen vermittels der Haupt-Kraftstoffpumpe gewährleistet werden, wenn die Entnahmeleitung in das Entnahme-Tankvolumen im Bereich des unteren Entnahme-Tankvolumenbereichs einmündet.

Das Vermeiden einer direkten Kraftstoffaustauschverbindung zwischen dem Haupt-Tankvolumen und dem unteren Entnahme-Tankvolumenbereich wird dadurch gewährleistet, dass bei bezüglich einer horizontalen Ebene nicht geneigter Positionierung des Tanksystems der untere Entnahme-Tankvolumenbereich in Vertikalrichtung im Wesentlichen vollständig unter einer Bodenwandung der Tankaußenwand im Bereich des Haupt-Tankvolumens positioniert ist.

Zum Speisen von Kraftstoff aus dem Haupt-Tankvolumen in das Entnahme-Tankvolumen kann die Kraftstoff-Speiseanordnung eine in das Haupt-Tankvolumen einmündende und von dem Haupt-Tankvolumen zu der Zusatz-Kraftstoffpumpe führende erste Speiseleitung und eine in das Entnahme-Tankvolumen einmündende und von der Zusatz-Kraftstoffpumpe zu dem Entnahme-Tankvolumen führende zweite Speiseleitung umfassen. Dabei kann vorgesehen sein, dass die zweite Speiseleitung in das Entnahme-Tankvolumen im Bereich des oberen Entnahme-Tankvolumenbereichs einmündet.

Um beim Speisen von Kraftstoff aus dem Haupt-Tankvolumen in das Entnahme-Tankvolumen zusätzlich eine Reinigungsfunktion bereitstellen zu können, wird vorgeschlagen, dass im Bereich der ersten Speiseleitung ein Kraftstofffilter angeordnet ist.

Um eine weiter erhöhte Sicherheit gegen einen durch eine stark geneigte Positionierung des Tanksystems für eine Entnahme von Kraftstoff ungeeigneten Zustand bereitstellen zu können, wird vorgeschlagen, dass das Tankvolumen durch wenigstens eine Zwischenwand in einen das Entnahme-Tankvolumen enthaltenden ersten Tankvolumenbereich und einen mit dem ersten Tankvolumenbereich in Kraftstoffaustauschverbindung stehenden zweiten Tankvolumenbereich unterteilt ist. Eine derartige Unterteilung gewährleistet insbesondere auch, dass durch Bewegungen des Tanksystems bzw. einer dieses aufweisenden Baumaschine oder dergleichen hervorgerufene Schwappbewegungen des im Tankvolumen enthaltenen Kraftstoffs im Wesentlichen nicht dazu führen können, dass das Speisen von Kraftstoff aus dem Haupt-Tankvolumen in das Entnahme-Tankvolumen beeinträchtigt wird.

Dabei ist vorzugsweise dann vorgesehen, dass die erste Speiseleitung in das Haupt-Tankvolumen im Bereich des ersten Tankvolumenbereichs einmündet.

Insbesondere dann, wenn nicht der gesamte durch die Haupt-Kraftstoffpumpe aus dem Entnahme-Tankvolumen in Richtung zu einem Kraftstoff verbrauchenden Systembereich geförderte Kraftstoff in diesem Systembereich verbraucht wird, ist es vorteilhaft, wenn eine in das Tankvolumen einmündende Rückspeiseleitung zum Rückspeisen von vermittels der Haupt-Kraftstoffpumpe aus dem Entnahme-Tankvolumen gefördertem Kraftstoff in das Tankvolumen vorgesehen ist, wobei die Rückspeiseleitung im Bereich des Entnahme-Tankvolumens in das Tankvolumen einmündet.

Gemäß einem besonders vorteilhaften Aspekt der vorliegenden Erfindung kann weiter vorgesehen sein, dass die Kraftstoff-Speiseanordnung dazu ausgebildet ist, Kraftstoff wahlweise in das Entnahme-Tankvolumen oder zu dem Kraftstoff verbrauchenden Systembereich zu speisen. Dies ermöglicht es, vermittels der Zusatz-Kraftstoffpumpe der Kraftstoff-Speiseanordnung insbesondere dann, wenn im Bereich der Haupt-Kraftstoffpumpe ein Defekt auftritt und diese nicht mehr in geeigneter Weise zum Fördern von Kraftstoff eingesetzt werden kann, den Kraftstoff verbrauchenden Systembereich weiterhin mit Kraftstoff zu speisen, beispielsweise um eine mit einem derartigen Tanksystem ausgestattete Baumaschine dann zumindest noch zu einer Werkstatt bewegen zu können.

Gemäß einem weiteren vorteilhaften Aspekt wird vorgeschlagen, dass die Kraftstoff-Speiseanordnung dazu ausgebildet ist, die Zusatz-Kraftstoffpumpe während eines Förderbetriebs der Haupt-Kraftstoffpumpe permanent zu betreiben. Somit ist durch einen permanenten Förderbetrieb bzw. den durch die Zusatz-Kraftstoffpumpe bereitgestellten Umwälzbetrieb jederzeit eine gute Durchmischung des in dem Tankvolumen enthaltenen Kraftstoffs mit von einem Kraftstoff verbrauchenden Systembereich nicht verbrauchtem und daher in das Tankvolumen zurückgeleitetem Kraftstoff, welcher im allgemeinen eine erhöhte Temperatur aufweist, gewährleistet. Auch wird das Absetzen von Verunreinigungen im Tankvolumen verhindert.

Eine Funktionsverschmelzung kann in einer derartigen Baumaschine dadurch erreicht werden, dass ein Teil der Tankaußenwand eine Außenhülle der Baumaschine bereitstellt.

Um ein möglichst großes Tankvolumen bereitzustellen, wird vorgeschlagen, dass das Tankvolumen einen bezüglich einer Maschinenquerrichtung im Wesentlichen zentralen Tankvolumenbereich und bezüglich einer Maschinenlängsrichtung beidseits des zentralen Tankvolumenbereichs seitliche Tankvolumenbereiche umfasst.

Dabei kann der zentrale Tankvolumenbereich im Wesentlichen durch den ersten Tankvolumenbereich bereitgestellt sein, und die seitlichen Tankvolumenbereiche können im Wesentlichen durch den zweiten Tankvolumenbereich bereitgestellt sein.

Zum Einleiten von Kraftstoff in das Tankvolumen ohne dass dabei ein Stören mit anderen Systembereichen, beispielsweise einem Antriebsaggregat der Baumaschine, auftritt, kann eine Befüllöffnung zum Einfüllen von Kraftstoff in das Tankvolumen zu einem der seitlichen Tankvolumenbereiche offen sein.

Die Erfindung betrifft ferner ein Verfahren zum Betreiben des Tanksystems der erfindungsgemäß aufgebauten Baumaschine, wobei die Zusatz-Kraftstoffpumpe zum Fördern von Kraftstoff aus dem Haupt-Tankvolumen in das Entnahme-Tankvolumen betrieben wird, wenn eine von einer Sensorik bereitgestellte Füllstandinformation einen zu geringen Füllstand im Entnahme-Tankvolumen indiziert.

Mit diesem Verfahren kann sichergestellt werden, dass die Zusatz-Kraftstoffpumpe tatsächlich nur dann betrieben wird, wenn dies aufgrund eines zu geringen Füllstandes in demjenigen Bereich des Kraftstofftanks, aus welchem der Kraftstoff entnommen wird, tatsächlich auch erforderlich ist. In Zuständen, in welchen ein ausreichender Füllstand vorliegt und entsprechend auch durch die Füllstandinformation indiziert ist, kann somit auf das Betreiben der Zusatz-Kraftstoffpumpe verzichtet werden. Ist eine als Grundlage für die Füllstandinformation heranzuziehende Sensorsignale bereitstellende Sensorik nicht vorhanden, kann die Zusatz-Kraftstoffpumpe permanent betrieben werden, also immer dann, wenn auch die Haupt-Kraftstoffpumpe betrieben wird.

Die vorliegende Erfindung wird nachfolgend mit Bezug auf die beiliegenden Figuren detailliert beschrieben. Es zeigt:
- Fig. 1: eine Draufsicht auf ein Teil eines Maschinenrahmens einer Baumaschine, wie z. B. Bodenverdichter;

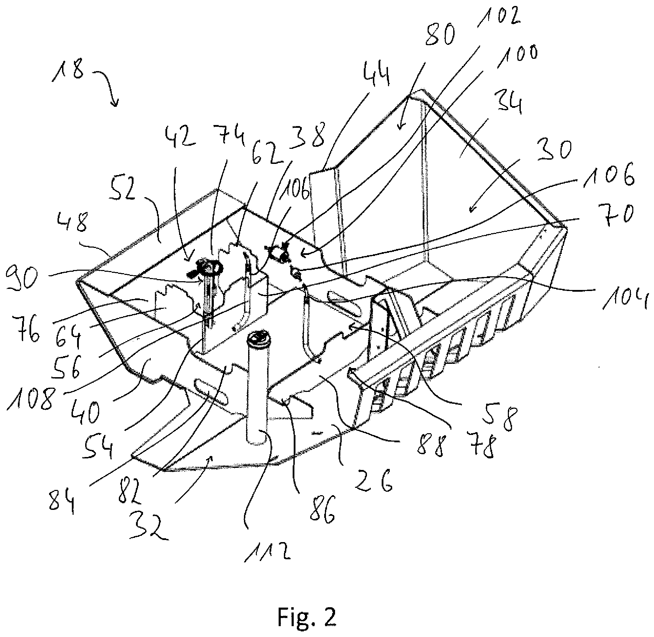

- Fig.2: eine perspektivische und teilweise geöffnete Ansicht eines an dem Maschinenrahmen der Fig. 1 vorgesehenen Heckbereichs mit einem Tanksystem;
- Fig. 3: eine Teil-Längsschnittansicht eines Tanksystems, geschnitten längs einer Linie III-III in Fig. 1.

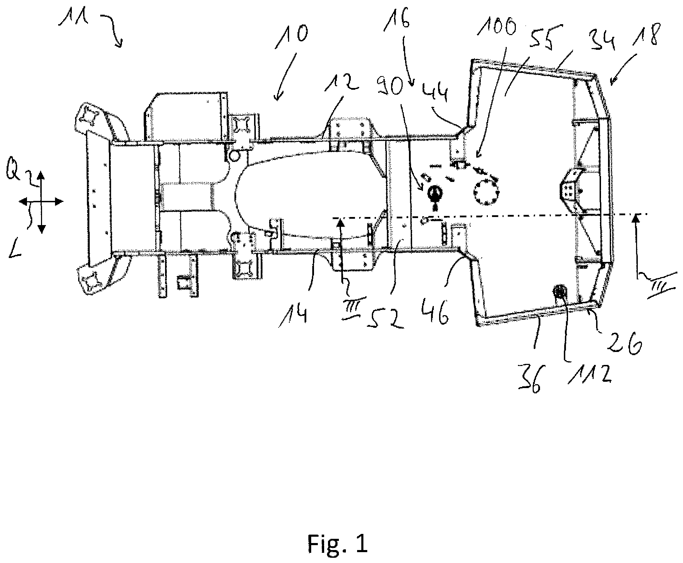

Der in Fig. 1 in Draufsicht dargestellte Maschinenrahmen 10 bildet den hinteren Bereich eines Maschinenrahmens einer Baumaschine 11, wie z. B. Bodenverdichter, an dem beispielsweise ein Antriebsaggregat, insbesondere Diesel-Brennkraftmaschine, und die durch ein derartiges Antriebsaggregat anzutreibenden und beidseits des Maschinenrahmens 10 positionierten Antriebsräder vorgesehen sind. Der Maschinenrahmen 10 umfasst in einer Maschinenlängsrichtung L sich erstreckende und in einer Maschinenquerrichtung Q in Abstand zueinander verlaufende Längsträger 12, 14 mit voneinander weg weisenden Seitenwangen. In einem hinteren Bereich 16 dieser beiden Längsträger 12, 14, die selbstverständlich durch verschiedene Querträger miteinander verbunden sein können, ist ein nachfolgend detailliert beschriebenes Tanksystem 18 der mit dem Maschinenrahmen 10 aufgebauten und Baumaschine 11 vorgesehen.

Das Tanksystem 18 umfasst einen allgemein mit 20 bezeichneten Kraftstofftank, dessen Tankvolumen 22 durch eine Tankaußenwand 24 nach außen abgeschlossen ist. Die Tankaußenwand 24 umfasst eine in einem Heckbereich der Baumaschine 11 eine Heckschürze bereitstellende Außenhülle 26, welche im Wesentlichen eine Bodenwandung 28 und nachfolgend noch beschriebene seitliche Tankvolumenbereiche 30, 32 nach außen hin bzw. auch seitlich begrenzend ansteigendene Wandungen 34, 36 bereitstellt. An einem, ausgehend von der Bodenwandung 28, nach hinten und schräg nach oben ansteigenden Wandungsabschnitt 35 der Außenhülle 26 können mehrere Versteifungsstreben 37 beispielsweise durch Verschweißen festgelegt sein, um in diesem nach außen frei liegenden Bereich die Außenhülle 26 zu verstärken.

Die Tankaußenwand 24 umfasst ferner zwei im Wesentlichen mit der Bodenwandung 28 der Außenhülle 26 verbundene Zwischenwände 38, 40, welche zwischen sich einen zentralen Tankvolumenbereich 42 begrenzen, der in der Maschinenquerrichtung Q im Wesentlichen zentral am Maschinenrahmen 10 bzw. in der Baumaschine 11 angeordnet ist. Die beiden seitlichen Wandungen 34, 36 können in ihren an die Zwischenwände 38, 40 angrenzenden Bereichen mit in Richtung zu einem vorderen Bereich des Maschinenrahmens 10 abgewinkelten Wandungsabschnitten 44, 46 an die Zwischenwände 38, 40 beispielsweise durch Verschweißen und damit flüssigkeitsdicht angebunden sein.

Ein an die Bodenwandung 28 der Außenhülle 26 anschließendes Außenwandungsteil 48 schließt an die Bodenwandung 28 in deren vorderen Endbereich 50 an und umgreift in Richtung zu einem vorderen Bereich des Maschinenrahmens 10 orientierte, nach oben beispielsweise keilartig zulaufende Endbereiche der Zwischenwände 38, 40 auch mit einem an der Oberseite der Zwischenwände 38, 40 positionierten Wandungsabschnitt 52.

Eine das Tankvolumen 22 in einer Vertikalrichtung V nach oben abschließende, plattenartige Tankdecke 55 ist in ihren an den Wandungsabschnitt 52, die Zwischenwände 38, 40 und die Außenhülle 26 angrenzenden Bereichen mit diesen Teilen bzw. Systembereichen durch Verschweißen fest und flüssigkeitsdicht verbunden.

Die im Wesentlichen von dem Außenwandungsteil 48 umgriffenen vorderen Endbereiche der Zwischenwände 38, 40 sind im Maschinenrahmen 10 zwischen den beiden Längsträgern 12, 14 aufgenommen und liegen somit auch mit dem Außenwandungsteil 48 zumindest bereichsweise im Inneren des Maschinenrahmens 10, so dass diese Bereiche keinen Teil der nach außen hin sichtbaren Hülle des Maschinenrahmens 10 bzw. der Baumaschine 11 bereitstellen.

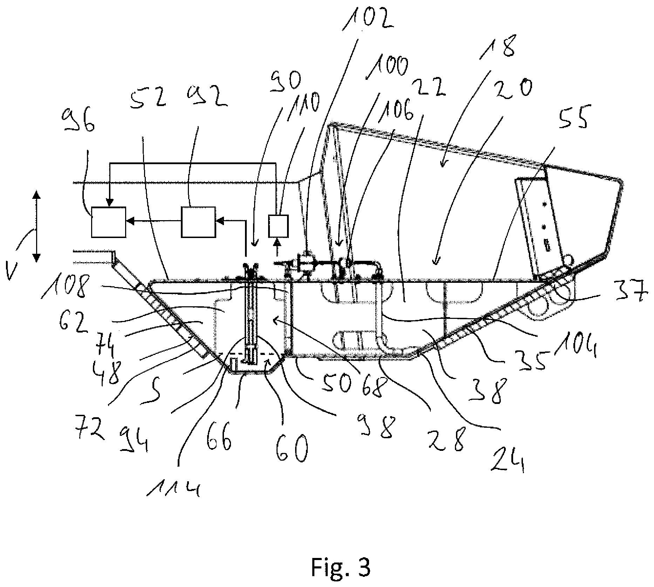

Im Inneren des Kraftstofftanks 22 ist eine im Wesentlichen U-förmig gestaltete Trennwand 54 vorgesehen. Diese begrenzt mit dem Außenwandungsteil 48 ein Entnahme-Tankvolumen 56 und trennt dieses von dem allgemein als Haupt-Tankvolumen 58 bezeichneten verbleibenden Teil des Tankvolumens 22. Das Entnahme-Tankvolumen 56 kann grundsätzlich in zwei durch eine Strichlinie S in Fig. 3 angedeutete Bereiche unterteilt werden. Dies ist zum einen ein unter der Strichlinie S liegender unterer Entnahme-Tankvolumenbereich 60, der seitlich durch U-Schenkel 62, 64 der U-förmigen Trennwand 54 begrenzt ist und nach unten und in Richtung nach vorne bzw. nach hinten durch einen an die Bodenwandung 28 der Außenhülle 26 anschließenden Wandungsabschnitt 66 des Außenwandungsteils 48 begrenzt ist. Über der Strichlinie S liegt ein oberer Entnahme-Tankvolumenbereich 68, der zur Seite hin und in Richtung nach hinten durch die U-Schenkel 62, 64 bzw. eine Verbindungsabschnitt 70 der Trennwand 54 umgrenzt ist, nach vorne bzw. zwischen den vorderen Endkanten der U-Schenkel 62, 64 und einem nach oben ansteigenden Wandungsabschnitt 72 des Außenwandungsteils 48 jedoch über seitliche bzw. keilförmige Öffnungen 74, 76 zum Haupt-Tankvolumen 58 offen ist. Auch im oberen Randbereich der Trennwand 54 ist der obere Entnahme-Tankvolumenbereich 68 zum Haupt-Tankvolumen 58 offen.

Man erkennt in Fig. 3, dass der untere Entnahme-Tankvolumenbereich 60, welcher keine direkte Kraftstoffaustauschverbindung mit dem Haupt-Tankvolumen 58 aufweist, sondern nach unten und seitlich bzw. nach vorne eine abgeschlossene Wanne bereitstellt, im Wesentlichen unter dem durch die Bodenwandung 28 bereitgestellten Niveau liegt. Somit ist sichergestellt, dass auch bei minimalem Füllstand des Kraftstofftanks 20 und im Wesentlichen nicht geneigter Positionierung des Tanksystems 18, wie diese in Fig. 3 veranschaulicht ist, sich immer Kraftstoff im unteren Entnahme-Tankvolumenbereich 60 ansammeln wird. Neigt der hintere Bereich des Tanksystems 18, also in Fig. 3 der rechte Bereich, sich nach unten, verhindert die Trennwand 54 ein Auslaufen des im unteren Entnahme-Tankvolumenbereich 60 vorhandenen Kraftstoffs. Neigt das Tanksystem 18 sich vorne nach unten, wird der gesamte im Tankvolumen 22 vorhandene Kraftstoff sich im vorderen Bereich des Kraftstofftanks 22 und somit auch im Bereich des unteren Entnahme-Tankvolumenbereichs 60 ansammeln.

Das Tankvolumen 22 ist durch die beiden Zwischenwände 38, 40 im Wesentlichen in einen auch das Entnahme-Tankvolumen 56 enthaltenden ersten Tankvolumenbereich 78 und einen im Wesentlichen die beiden seitlichen Tankvolumenbereiche 30, 32 umfassenden zweiten Tankvolumenbereich 80 unterteilt. Der erste Tankvolumenbereich 78, welcher im Wesentlichen auch den zentralen Tankvolumenbereich 42 bereitstellt, ist über in den Zwischenwänden 38, 40 gebildete Aussparungen 82, 84, 86 in Verbindung mit dem im Wesentlichen die beiden seitlichen Tankvolumenbereiche 30, 32 bereitstellenden zweiten Tankvolumenbereich 80. Ferner ist im ersten Tankvolumenbereich 78 eine zwischen den beiden Zwischenwänden 38, 40 verlaufende Verbindungswand 88 vorgesehen, welche den zentralen Tankvolumenbereich 80 in durch die Formgebung der Verbindungswandung 88 miteinander kommunizierende Bereiche unterteilt. Die Verbindungswandung 88 verhindert im Wesentlichen übermäßige Schwappbewegungen des im zentralen Tankvolumenbereich 42 vorhandenen Kraftstoffs in der Maschinenlängsrichtung L.

Zum Fördern von im Kraftstofftank 20 vorhandenem Kraftstoff zu einem Kraftstoff verbrauchenden Systembereich 96, beispielsweise einer Diesel-Brennkraftmaschine der Baumaschine 11, ist eine allgemein mit 90 bezeichnete Kraftstoff-Entnahmeanordnung vorgesehen. Diese umfasst eine von dem unteren Entnahme-Tankvolumenbereich 60 zu einer Haupt-Kraftstoffpumpe 92 führende Entnahmeleitung 94. Von der Haupt-Kraftstoffpumpe 92 wird der Kraftstoff dann in Richtung zu dem Kraftstoff verbrauchenden Systembereich 96 gefördert. Der darin nicht benötigte Kraftstoff wird über eine Rückspeiseleitung 98 in das Entnahme-Tankvolumen 56, insbesondere den unteren Entnahme-Tankvolumenbereich 60 zurückgespeist.

Das Tanksystem 18 umfasst ferner eine allgemein mit 100 bezeichnete Kraftstoff-Speiseanordnung. Einen wesentlichen Bestandteil der Kraftstoff-Speiseanordnung 100 bildet eine Zusatz-Kraftstoffpumpe 102, welche über eine erste Speiseleitung 104 Kraftstoff aus dem Haupt-Tankvolumen 58, insbesondere dem ersten Tankvolumenbereich 78 des Tankvolumens 22, entnimmt und diesen über einen der Zusatz-Kraftstoffpumpe 102 vorgeschalteten Kraftstofffilter 106 und eine zweite Speiseleitung 108 in das Entnahme-Tankvolumen 56 im Bereich des oberen Entnahme-Tankvolumenbereichs 68 einspeist.

Die Zusatz-Kraftstoffpumpe 102 der Kraftstoff-Speiseanordnung 100 kann vorzugsweise permanent immer dann betrieben werden, wenn auch die Haupt-Kraftstoffpumpe 92 der Kraftstoff-Entnahmeanordnung 90 betrieben wird. Auf diese Art und Weise wird sichergestellt, dass unabhängig von der Neigungspositionierung der Baumaschine 11 bzw. des Tanksystems 18 immer ausreichend Kraftstoff im Entnahme-Tankvolumen 56, insbesondere im unteren Entnahme-Tankvolumenbereich 60 desselben, vorhanden ist, so dass ein Zustand, in welchem der in den unteren Entnahme-Tankvolumenbereich 60 eingreifende Endbereich der Entnahmeleitung 94 nicht in Kraftstoff eingetaucht ist und somit die Haupt-Kraftstoffpumpe 92 Luft ansaugen würde, nicht auftreten kann. Der Betrieb der Zusatz-Kraftstoffpumpe 102 stellt weiter sicher, dass der im Tankvolumen 22 vorhandene Kraftstoff ständig umgewälzt wird, so dass einerseits das Absetzen von Verunreinigungen vermieden wird, andererseits beim Umwälzen mitgeführte Verunreinigungen im Kraftstofffilter 106 ausgefiltert werden können. Ferner wird durch diese während des Förderbetriebs der Haupt-Kraftstoffpumpe 92 aufgebaute Umwälzung gewährleistet, dass eine ständige Durchmischung von über die Rückspeiseleitung 98 zurückgespeistem und im Allgemeinen erwärmtem Kraftstoff mit im Kraftstofftank 20 vorhandenem Kraftstoff auftritt, so dass eine übermäßige Erwärmung insbesondere von im Entnahme-Tankvolumen 56 vorhandenem Kraftstoff vermieden werden kann.

Ein weiterer funktionaler Aspekt der Kraftstoff-Speiseanordnung 100 ist in Fig. 3 angedeutet. Über ein Ventil 110 kann durch die Zusatz-Kraftstoffpumpe 102 aus dem Haupt-Tankvolumen 58 geförderter Kraftstoff nicht in das Entnahme-Tankvolumen 56, sondern direkt in Richtung zu dem Kraftstoff verbrauchenden Systembereich 96, also beispielsweise der Diesel-Brennkraftmaschine, geleitet werden. Dies ermöglicht einen Notbetrieb dann, wenn im Bereich der Haupt-Kraftstoffpumpe 92 ein Defekt auftritt und diese nicht mehr dazu betrieben werden kann, Kraftstoff zur Diesel-Brennkraftmaschine 96 zu leiten. Es kann dann zumindest gewährleistet werden, dass die Baumaschine 11 zu einer Werkstatt bewegt werden kann, um dort die erforderlichen Reparaturen vorzunehmen.

Zum Einfüllen von Kraftstoff in das Tankvolumen 22 ist ein Einfüllstutzen 112 vorgesehen, der eine zum seitlichen Tankvolumenbereich 32 offene Befüllöffnung bereitstellt. Durch diese seitliche Positionierung des Einfüllstutzens 112 wird ein gegenseitiges Stören desselben mit zentral am Maschinenrahmen 10 angeordneten Systembereichen, wie z. B. der Diesel-Brennkraftmaschine, vermieden, welche beispielsweise so angeordnet sein kann, dass sie im Heckbereich des Maschinenrahmens 10 über den beiden Zwischenwänden 38, 40 positioniert ist, so dass auch die Zwischenwände 38, 40 eine tragende Funktion für die Diesel-Brennkraftmaschine erfüllen können.

Bei dem vorangehend beschriebenen Tanksystem kann die Zusatz-Kraftstoffpumpe 102 beispielsweise immer dann betrieben werden, wenn auch die Haupt-Kraftstoffpumpe 92 betrieben wird. Um dann, wenn aufgrund eines ausreichenden Füllstandes ein Betrieb der Zusatz-Kraftstoffpumpe 102 nicht erforderlich ist, beispielsweise wenn bei ausreichendem Füllstand auch bei stark geneigter Baumaschine immer gewährleistet ist, dass das Entnahme-Tankvolumen 56 mit Kraftstoff gefüllt ist, kann eine Sensorik vorgesehen sein, welche Sensorsignale liefert, die als oder zum Bereitstellen von Füllstandinformation genutzt werden können. Diese Sensorik kann beispielsweise einen in Fig. 3 erkennbaren und im Entnahme-Tankvolumen 56 angeordneten Füllstandsensor 114 umfassen. Liefert dieser ein Signal, welches indiziert, dass im Entnahme-Tankvolumen 56 nur wenig Kraftstoff enthalten ist, kann dies dazu genutzt werden, vermittels einer Ansteuereinheit, welche auch das Signal von dem Füllstandsensor 114 empfangen kann, die Zusatz-Kraftstoffpumpe 102 in Betrieb zu setzen. Ist im Entnahme-Tankvolumen 56 ausreichend Kraftstoff enthalten, kann die Zusatz-Kraftstoffpumpe 102 wieder deaktiviert werden bzw. deaktiviert gehalten werden.

Die Sensorik, welche als Grundlage für Füllstandinformation heranzuziehende Sensorsignale liefert, kann alternativ oder zusätzlich auch einen Neigungssensor umfassen. Indiziert dieser eine über einer Schwellenneigung liegende Neigung einer Baumaschine bzw. des Tanksystems, so kann beispielsweise unabhängig vom tatsächlich vorhandenen Füllstand des Tankvolumens 22 die Zusatz-Kraftstoffpumpe 102 aktiviert werden, um sicherzustellen, dass auch unter Berücksichtigung des Umstandes, dass im Betrieb der Baumaschine der Füllstand im Tankvolumen 22 abnehmen wird, im Entnahme-Tankvolumen 56 immer ausreichend Kraftstoff vorhanden ist. Grundsätzlich kann diese Information über die Neigung einer Baumaschine auch kombiniert werden mit der durch einen Füllstandsensor, beispielsweise dem in Fig. 3 dargestellten Füllstandsensor 114, bereitgestellten Information über den Füllstand im Tankvolumen 22 bzw. im Entnahme-Tankvolumen 56. Liegt dieser Füllstand unter einem Schwellenfüllstand und liegt die Neigung über der Schwellenneigung, kann die Zusatz-Kraftstoffpumpe 102 aktiviert werden, um zu gewährleisten, dass im Entnahme-Tankvolumen 56 ausreichend Kraftstoff vorhanden ist.

Mit dem erfindungsgemäßen Aufbau eines Tanksystems für eine Baumaschine wird gewährleistet, dass unabhängig von der im Arbeitsbetrieb einer derartigen Baumaschine eingenommenen Positionierung derselben und somit auch unabhängig von einer Neigung des Tanksystems bezüglich einer horizontalen Ebene immer ausreichend Kraftstoff in demjenigen Bereich zur Verfügung gestellt ist, aus welchem dieser in Richtung zu dem Kraftstoff verbrauchenden Systembereich gefördert wird. Da bei diesem Tanksystem das Tankvolumen in wesentlichen Bereichen auch durch eine Außenhülle eines Maschinenrahmens bzw. einer Baumaschine begrenzt ist und somit keine weiteren die Außenwandung des Tanksystems außen umkleidenden Verkleidungsteile oder Rahmenteile vorgesehen sind, wird eine effiziente Ausnutzung des an einer Baumaschine zur Verfügung stehenden Bauraums zur Speicherung von Kraftstoff gewährleistet.

## Patentansprüche

1. Baumaschine mit einem Tanksystem, das Tanksystem umfassend:
- einen Kraftstofftank (20) mit einer ein Tankvolumen (22) nach außen abschließenden Tankaußenwand (24),
- ein durch eine Trennwand (54) von einem Haupt-Tankvolumen (58) des Tankvolumens (22) getrenntes, mit dem Haupt-Tankvolumen (58) in Kraftstoffaustauschverbindung stehendes Entnahme-Tankvolumen (56),
- eine Kraftstoff-Entnahmeanordnung (90) mit einer Haupt-Kraftstoffpumpe (92) und einer in das Entnahme-Tankvolumen (56) einmündenden Entnahmeleitung (94) zum Fördern von Kraftstoff vermittels der Haupt-Kraftstoffpumpe (92) über die Entnahmeleitung (94) aus dem Entnahme-Tankvolumen (56) zu einem Kraftstoff verbrauchenden Systembereich (96),
- eine Kraftstoff-Speiseanordnung (100) mit einer Zusatz-Kraftstoffpumpe (102) zum Fördern von Kraftstoff aus dem Haupt-Tankvolumen (58) in das Entnahme-Tankvolumen (56),
wobei das Entnahme-Tankvolumen (56) einen bezogen auf eine Vertikalrichtung (V) unteren Entnahme-Tankvolumenbereich (60) und einen an den unteren Entnahme-Tankvolumenbereich (60) in Vertikalrichtung (V) anschließenden oberen Entnahme-Tankvolumenbereich (68) umfasst, wobei der untere Entnahme-Tankvolumenbereich (60) derart vom Haupt-Tankvolumen (58) getrennt ist, dass zwischen dem Haupt-Tankvolumen (58) und dem unteren Entnahme-Tankvolumenbereich (60) keine direkte Kraftstoffaustauschverbindung besteht,
**dadurch gekennzeichnet, dass** bei bezüglich einer horizontalen Ebene nicht geneigter Positionierung des Tanksystems (18) der untere Entnahme-Tankvolumenbereich (66) in Vertikalrichtung (V) im Wesentlichen vollständig unter einer Bodenwandung (28) der Tankaußenwand (24) im Bereich des Haupt-Tankvolumens (58) positioniert ist.

2. Baumaschine nach Anspruch 1,
**dadurch gekennzeichnet, dass** die Entnahmeleitung (94) in das Entnahme-Tankvolumen (56) im Bereich des unteren Entnahme-Tankvolumenbereichs (60) einmündet.

3. Baumaschine nach einem der vorangehenden Ansprüche,
**dadurch gekennzeichnet, dass** die Kraftstoff-Speiseanordnung (100) eine in das Haupt-Tankvolumen (58) einmündende und von dem Haupt-Tankvolumen (58) zu der Zusatz-Kraftstoffpumpe (102) führende erste Speiseleitung (104) und eine in das Entnahme-Tankvolumen (56) einmündende und von der Zusatz-Kraftstoffpumpe (102) zu dem Entnahme-Tankvolumen (56) führende zweite Speiseleitung (108) umfasst.

4. Baumaschine nach Anspruch 3,
**dadurch gekennzeichnet, dass** die zweite Speiseleitung (108) in das Entnahme-Tankvolumen (56) im Bereich des oberen Entnahme-Tankvolumenbereichs (68) einmündet.

5. Baumaschine nach Anspruch 3 oder 4,
**dadurch gekennzeichnet, dass** im Bereich der ersten Speiseleitung (104) ein Kraftstofffilter (106) angeordnet ist.

6. Baumaschine nach einem der vorangehenden Ansprüche,
**dadurch gekennzeichnet, dass** das Tankvolumen (22) durch wenigstens eine Zwischenwand (38, 40) in einen das Entnahme-Tankvolumen (56) enthaltenden ersten Tankvolumenbereich (78) und einen mit dem ersten Tankvolumenbereich (78) in Kraftstoffaustauschverbindung stehenden zweiten Tankvolumenbereich (80) unterteilt ist.

7. Baumaschine nach Anspruch 3 und Anspruch 6,
**dadurch gekennzeichnet, dass** die erste Speiseleitung (104) in das Haupt-Tankvolumen (58) im Bereich des ersten Tankvolumenbereichs (78) einmündet.

8. Baumaschine nach einem der vorangehenden Ansprüche,
**dadurch gekennzeichnet, dass** eine in das Tankvolumen (22) einmündende Rückspeiseleitung (98) zum Rückspeisen von vermittels der Haupt-Kraftstoffpumpe (92) aus dem Entnahme-Tankvolumen (56) gefördertem Kraftstoff in das Tankvolumen (22) vorgesehen ist, wobei die Rückspeiseleitung (98) im Bereich des Entnahme-Tankvolumens (56) in das Tankvolumen (22) einmündet.

9. Baumaschine nach einem der vorangehenden Ansprüche,
**dadurch gekennzeichnet, dass** die Kraftstoff-Speiseanordnung (100) dazu ausgebildet ist, Kraftstoff wahlweise in das Entnahme-Tankvolumen (56) oder zu dem Kraftstoff verbrauchenden Systembereich (96) zu speisen.

10. Baumaschine nach einem der vorangehenden Ansprüche,
**dadurch gekennzeichnet, dass** die Kraftstoff-Speiseanordnung (100) dazu ausgebildet ist, die Zusatz-Kraftstoffpumpe (102) während eines Förderbetriebs der Haupt-Kraftstoffpumpe (92) permanent zu betreiben.

11. Baumaschine nach einem der vorangehenden Ansprüche,
**dadurch gekennzeichnet, dass** ein Teil der Tankaußenwand (24) eine Außenhülle (26) der Baumaschine (10) bereitstellt.

12. Baumaschine nach einem der vorangehenden Ansprüche,
**dadurch gekennzeichnet, dass** das Tankvolumen (22) einen bezüglich einer Maschinenquerrichtung (Q) im Wesentlichen zentralen Tankvolumenbereich (42) und bezüglich einer Maschinenlängsrichtung (L) beidseits des zentralen Tankvolumenbereichs (42) seitliche Tankvolumenbereiche (30, 32) umfasst.

13. Baumaschine nach Anspruch 12, sofern auf Anspruch 7 rückbezogen,
**dadurch gekennzeichnet, dass** der zentrale Tankvolumenbereich (42) im Wesentlichen durch den ersten Tankvolumenbereich (78) bereitgestellt ist, und dass die seitlichen Tankvolumenbereiche (30, 32) im Wesentlichen durch den zweiten Tankvolumenbereich (80) bereitgestellt sind.

14. Baumaschine nach Anspruch 12 oder 13,
**dadurch gekennzeichnet, dass** eine Befüllöffnung zum Einfüllen von Kraftstoff in das Tankvolumen (22) zu einem der seitlichen Tankvolumenbereiche (30, 32) offen ist.

15. Verfahren zum Betreiben des Tanksystems der Baumaschine nach einem der Ansprüche 1-14, wobei die Zusatz-Kraftstoffpumpe (102) zum Fördern von Kraftstoff aus dem Haupt-Tankvolumen (58) in das Entnahme-Tankvolumen (56) betrieben wird, wenn eine von einer Sensorik bereitgestellte Füllstandinformation einen zu geringen Füllstand im Entnahme-Tankvolumen (56) indiziert.

## Claims

1. A construction machine with a tank system, the tank system comprising:
- a fuel tank (20) having a tank outer wall (24) which closes off a tank volume (22) to the outside,
- a withdrawal tank volume (56) separated by a partition wall (54) from a main tank volume (58) of the tank volume (22) and in fuel-exchanging connection with the main tank volume (58),
- a fuel withdrawal arrangement (90) having a main fuel pump (92) and a withdrawal line (94) opening into the withdrawal tank volume (56) for conveying fuel by means of the main fuel pump (92) via the withdrawal line (94) from the withdrawal tank volume (56) to a fuel-consuming system region (96),
- a fuel feed arrangement (100) having an auxiliary fuel pump (102) for conveying fuel from the main tank volume (58) into the withdrawal tank volume (56),
wherein the withdrawal tank volume (56) comprises a lower withdrawal tank volume region (60) in relation to a vertical direction (V) and an upper withdrawal tank volume region (68) adjoining the lower withdrawal tank volume region (60) in the vertical direction (V), wherein the lower withdrawal tank volume region (60) is separated from the main tank volume (58) in such a way that there is no direct fuel-exchanging connection between the main tank volume (58) and the lower withdrawal tank volume (60),
**characterized in that** in case of a positioning of the tank system which is not inclined in relation to a horizontal plane, the lower withdrawal tank volume area (66) is positioned in the vertical direction (V) essentially completely under a bottom wall (28) of the tank outer wall (24) in the region of the main tank volume (58).

2. The construction machine as claimed in claim 1,
**characterized in that** the withdrawal line (94) opens into the withdrawal tank volume (56) in the region of the lower withdrawal tank volume region (60).

3. The construction machine as claimed in any one of the preceding claims,
**characterized in that** the fuel feed arrangement (100) comprises a first feed line (104) opening into the main tank volume (58) and leading from the main tank volume (58) to the auxiliary fuel pump (102) and a second feed line (108) opening into the withdrawal tank volume (56) and leading from the auxiliary fuel pump (102) to the withdrawal tank volume (56).

4. The construction machine as claimed in claim 3,
**characterized in that** the second feed line (108) opens into the withdrawal tank volume (56) in the region of the upper withdrawal tank volume region (68).

5. The construction machine as claimed in claim 3 or 4,
**characterized in that** a fuel filter (106) is arranged in the region of the first feed line (104).

6. The construction machine as claimed in any one of the preceding claims,
**characterized in that** the tank volume (22) is divided by at least one intermediate wall (38, 40) into a first tank volume region (78) containing the withdrawal tank volume (56) and a second tank volume region (80) having a fuel-exchanging connection to the first tank volume (78).

7. The construction machine as claimed in claim 3 and claim 6,
**characterized in that** the first feed line (104) opens into the main tank volume (58) in the region of the first tank volume region (78).

8. The construction machine as claimed in any one of the preceding claims,
**characterized in that** a return feed line (98) opening into the tank volume (22) is provided for feeding back fuel conveyed by means of the main fuel pump (92) from the withdrawal tank volume (56) into the tank volume (22), wherein the return feed line (98) opens into the tank volume (92) in the region of the withdrawal tank volume (56).

9. The construction machine as claimed in any one of the preceding claims,
**characterized in that** the fuel feed arrangement (100) is designed to feed fuel alternately into the withdrawal tank volume (56) or to the fuel-consuming system region (96).

10. The construction machine as claimed in any one of the preceding claims,
**characterized in that** the fuel feed arrangement (100) is designed to permanently operate the auxiliary fuel pump (102) during delivery operation of the main fuel pump (92).

11. The construction machine as claimed in any one of the preceding claims,
**characterized in that** a part of the tank outer wall (24) provides an outer casing (26) for the construction machine (10).

12. The construction machine as claimed in any one of the preceding claims,
**characterized in that** the tank volume (22) comprises a tank volume region (42) which is essentially central with respect to a machine transverse direction (Q) and lateral tank volume regions (30, 32) on both sides of the central tank volume region (42) with respect to a machine longitudinal direction (L).

13. The construction machine as claimed in claim 12, if referred back to claim 7,
**characterized in that** the central tank volume region (42) is essentially provided by the first tank volume region (78), and **in that** the lateral tank volume regions (30, 32) are essentially provided by the second tank volume region (80).

14. The construction machine as claimed in claim 12 or 13,
**characterized in that** a filling opening for filling fuel into the tank volume (22) is open to one of the lateral tank volume regions (30, 32).

15. A method for operating the tank system of the construction machine as claimed in any one of claims 1 to 14, wherein the auxiliary fuel pump (102) for conveying fuel from the main tank volume (58) into the withdrawal tank volume (56) is operated when fill level information provided by a sensor system indicates the fill level in the withdrawal tank volume (56) is too low.

## Revendications

1. Une machine de construction avec un système de réservoir, le système de réservoir comprenant :
- un réservoir de carburant (20) ayant une paroi extérieure de réservoir (24) qui ferme un volume de réservoir (22) vers l'extérieur,
- un volume de réservoir de prélèvement (56) séparé par une paroi de séparation (54) d'un volume de réservoir principal (58) du volume de réservoir (22) et en communication d'échange de carburant avec le volume de réservoir principal (58),
- un dispositif de prélèvement de carburant (90) comprenant une pompe à carburant principale (92) et une conduite de prélèvement (94) débouchant dans le volume de réservoir de prélèvement (56) pour acheminer le carburant au moyen de la pompe à carburant principale (92) via la conduite de prélèvement (94) du volume de réservoir de prélèvement (56) vers une zone de système consommatrice de carburant (96),
- un dispositif d'alimentation en carburant (100) comportant une pompe à carburant auxiliaire (102) pour acheminer le carburant du volume de réservoir principal (58) dans le volume de réservoir de prélèvement (56),
dans lequel le volume de réservoir de prélèvement (56) comprend une zone inférieure de volume de réservoir de prélèvement (60) par rapport à une direction verticale (V) et une zone supérieure de volume de réservoir de prélèvement (68) adjacente à la zone inférieure de volume de réservoir de prélèvement (60) dans la direction verticale (V), dans lequel la zone inférieure de volume de réservoir de prélèvement (60) est séparée du volume de réservoir principal (58) de telle sorte qu'il n'y ait pas de connexion directe d'échange de carburant entre le volume de réservoir principal (58) et le volume de réservoir de prélèvement inférieur (60),
**caractérisé en ce que,** dans le cas d'un positionnement du système de réservoir qui n'est pas incliné par rapport à un plan horizontal, la zone inférieure de volume de réservoir de prélèvement (66) est positionnée dans la direction verticale (V) essentiellement complètement sous une paroi inférieure (28) de la paroi extérieure de réservoir (24) dans la région du volume de réservoir principal (58).

2. La machine de construction selon la revendication 1,
**caractérisée en ce que** la conduite de prélèvement (94) débouche dans le volume de réservoir de prélèvement (56) dans la région de la zone inférieure de volume de réservoir de prélèvement (60).

3. La machine de construction selon l'une des revendications précédentes,
**caractérisée en ce que** le dispositif d'alimentation en carburant (100) comprend une première conduite d'alimentation (104) débouchant dans le volume de réservoir principal (58) et menant du volume de réservoir principal (58) à la pompe à carburant auxiliaire (102) et une seconde conduite d'alimentation (108) débouchant dans le volume de réservoir de prélèvement (56) et menant de la pompe à carburant auxiliaire (102) au volume de réservoir de prélèvement (56).

4. La machine de construction selon la revendication 3,
**caractérisée en ce que** la seconde conduite d'alimentation (108) débouche dans le volume de réservoir de prélèvement (56) dans la région de la zone supérieure du volume de réservoir de prélèvement (68).

5. La machine de construction selon la revendication 3 ou 4,
**caractérisée en ce qu'un** filtre à carburant (106) est disposé dans la région de la première conduite d'alimentation (104).

6. La machine de construction selon l'une des revendications précédentes,
**caractérisée en ce que** le volume de réservoir (22) est divisé par au moins une paroi intermédiaire (38, 40) en une première zone de volume de réservoir (78) contenant le volume de réservoir de prélèvement (56) et une seconde zone de volume de réservoir (80) ayant une connexion d'échange de carburant avec le premier volume de réservoir (78).

7. La machine de construction selon la revendication 3 et la revendication 6,
**caractérisée en ce que** la première conduite d'alimentation (104) débouche dans le volume de réservoir principal (58) dans la région de la première zone de volume de réservoir (78).

8. La machine de construction selon l'une des revendications précédentes,
**caractérisée en ce qu'**une conduite de retour (98) débouchant dans le volume de réservoir (22) est prévue pour renvoyer le carburant acheminé par la pompe à carburant principale (92) du volume de réservoir de prélèvement (56) dans le volume de réservoir (22), dans lequel la conduite de retour (98) débouche dans le volume de réservoir (92) dans la région du volume de réservoir de prélèvement (56).

9. La machine de construction selon l'une des revendications précédentes,
**caractérisée en ce que** le dispositif d'alimentation en carburant (100) est conçu pour alimenter en carburant alternativement le volume de réservoir de prélèvement (56) ou la zone de système consommateur de carburant (96).

10. La machine de construction selon l'une des revendications précédentes,
**caractérisée en ce que** le dispositif d'alimentation en carburant (100) est conçu pour faire fonctionner en permanence la pompe à carburant auxiliaire (102) pendant le fonctionnement de la pompe à carburant principale (92).

11. La machine de construction selon l'une des revendications précédentes,
**caractérisée en ce qu'**une partie de la paroi extérieure du réservoir (24) constitue un boîtier extérieur (26) pour la machine de construction (10).

12. La machine de construction selon l'une des revendications précédentes,
**caractérisée en ce que** le volume de réservoir (22) comprend une zone de volume de réservoir (42) qui est essentiellement centrale par rapport à une direction transversale de la machine (Q) et des zones de volume de réservoir latérales (30, 32) des deux côtés de la zone de volume de réservoir centrale (42) par rapport à une direction longitudinale de la machine (L).

13. La machine de construction selon la revendication 12, si elle est renvoyée à la revendication 7,
**caractérisée en ce que** la zone de volume de réservoir centrale (42) est essentiellement constituée par la première zone de volume de réservoir (78), et **en ce que** les zones latérales de volume de réservoir (30, 32) sont essentiellement constituées par la seconde zone de volume de réservoir (80).

14. La machine de construction selon la revendication 12 ou 13,
**caractérisée en ce qu'**une ouverture de remplissage pour remplir de carburant le volume de réservoir (22) est ouverte sur l'une des zones latérales de volume de réservoir (30, 32).

15. Un procédé de fonctionnement du système de réservoir de la machine de construction selon l'une des revendications 1 à 14, dans lequel la pompe à carburant auxiliaire (102) pour acheminer le carburant du volume de réservoir principal (58) dans le volume de réservoir de prélèvement (56) est actionnée lorsque les informations de niveau de remplissage fournies par un système de capteurs indiquent que le niveau de remplissage dans le volume de réservoir de prélèvement (56) est trop bas.
